# EUROPEAN PATENT APPLICATION

(11) **EP 3 130 263 A1**
(43) Date of publication of application: **15.02.2017**
(21) Application number: 16182879.3
(22) Date of filing: 04.08.2016
(51) Int. Cl.: A47J 31/057, A47J 31/30

(54) **IMPROVED MOKA POT PROVIDED WITH A NON-METALLIC BOILER**

(30) Priority: 10.08.2015 IT UB20153035
(71) Applicant: Giacchino, Massimo, 40059 Medicina Bologna (IT)
(72) Inventor: Giacchino, Massimo, 40059 Medicina Bologna (IT)
(74) Representative: Ruzzu, Giammario

(57) **Abstract**

The moka pot (1) works as a conventional moka pot; the lower group (10) and the upper group (20) of the moka pot (1) are removably joined by quick connection means (30) and with interposition of annular sealing means (40).

In a first embodiment, the moka pot (1) is provided with a removable collecting pot (6) made of glass, and likewise, the boiling water tank (2) and the pipe (5) which carries the coffee to the collecting pot (6), are made of glass.

In addition, in the moka pot (1) said quick connection means (30) are made of a hinge (31) and a hook closure (32), therefore the upper group (20) can be overturned with respect to the lower one (10); in a second embodiment, said quick connection means (30) include two hook closures (32), diametrically opposite, therefore the upper group can be detached from the lower one (10).

## Description

### DESCRIPTION OF THE INVENTION

The present invention relates to the technical field of coffee machines, in particular those universally known as moka pots, which was created by an intuition of an inventor, who has developed and made flourish a well-known Italian company.

In such machines, coffee is obtained with a process known as percolation, whose details are not referred herein, as known also to non-expert in the field, and moreover, are not relevant to the invention.

Coffee machines include those, in which the beverage is delivered in a pot, often made of glass and sometimes heated.

These machines obtain coffee with different processes, for example with cofee pods, filter capsules or with the "American" method and are particularly suitable in those situations, for example, in places of work, in which the beverage cannot be drunk immediately, at least in part.

The moka pots usually have a metallic structure and are substantially made of two parts, lower and upper ones, coupled by screwing.

A first drawback that can be found in the moka pots as described above is due to the fact that metal, especially when the surface is not perfectly mirror made, may be inclined to host and support proliferation of colonies of bacteria, also thermoresistant. These bacteria could spread to the beverage and then move to the consumer thereof, and in the long run they could put the health in danger. In any case, keeping the moka pot in appropriate condition its all life long is difficult, also considering that it could last many years.

The screwing and unscrewing operations in themselves are simple, however, even if an excessive tightening is not necessary, they require some force to assure the seal tightness. Moreover, especially the unscrewing action can be difficult, in particular for elderly persons or persons with pathologies that do not allow to act with certain energy.

It is also quite common, in an environment where more than one person live, that the screwing operation is done by one person (stronger), and the unscrewing by another (physically weaker, even only due to age or health conditions). In this case unscrewing can become difficult, if not impossible.

Usually, once the moka pot has been used, it is allowed to cool with air, delaying cleaning and new filling to when unscrewing the two parts without burning is again possible.

In case it is necessary to fill again the moka pot immediately to make another coffee, it is cooled abruptly with water, however this method can damage the moka pot and should be avoided as far as possible.

The metal structure of the moka pots of known type is such that it is impossible to see from outside what is present and/or what is going on inside.

For example, it has happened to everyone to forget to put water in the boiling water tank, making burn the seal and the charged portion of coffee.

Furthermore, as it is known, it is necessary to promptly turn the cooking stove off, once the coffee has wholly raised, as to prevent it from boiling and altering the taste. In order to do it, it is necessary to look through the upper lid or wait for the typical bubbling noise produced when the bubbles begin to go out from the pipe.

In any case, fairly good attention is needed not to spoil coffee, which sometimes is not compatible with the hurry, simultaneous preparation of other things or with radio or TV turned on.

### DESCRIPTION OF THE INVENTION

Therefore, it is an object of the present invention to propose an improved moka pot, shaped so as to overcome the limits of the traditional moka pots, in particular with regard to the maintenance of optimal hygienical conditions for the entire operational life of the same.

A further object of the invention is to obtain a moka pot, whose original structure allows to visually control the correct filling of the boiling water tank with water as well as the phase of the beverage delivery, without the need to lift the cover or listen carefully if the typical noises occur.

Yet another object of the invention is to provide a moka pot in which opening and closing actions are particularly quick and simple.

Yet another object of the invention is to provide a moka pot in which opening and closing operations can be performed also by persons who are not strong or are no longer able to apply intense forces.

A further object of the invention is to provide a moka pot in which the force necessary for closing and the force required for opening are substantially identical, and in both cases only a limited force is needed.

Yet another object of the invention involves the intention to provide a moka pot that incorporates technical features of the separated pot, as in coffee makers of a different type.

Yet another object of the invention is to combine the above mentioned advantageous technical features in a moka pot, which is aesthetically remarkable, so as to combine functionality and beauty.

These and other objects are entirely fulfilled by an improved moka pot, in which the beverage is obtained by percolation and includes: a boiling water tank, designed to contain a predetermined amount of water and intended to be positioned with its bottom at a position to receive heat from a source below; a maximum pressure release valve, associated with said boiling water tank; a funnel-shaped filter, designed to contain a predetermined amount of ground coffee, intended to be positioned at the upper opening of said boiling water tank and partially inserted therein, to allow hot water produced inside the boiling water tank to rise through said ground coffee; a second plate-like filter, located directly above said funnel-shaped filter and provided to prevent the above mentioned ground coffee from rising together with the liquid infusion; a pipe extending upwards, designed to collect the aforementioned liquid infusion rising through the aforementioned second plate-like filter and to convey it into a collecting pot placed thereabove, with the above mentioned moka pot comprising:
- a lower group, comprising the aforementioned boiling water tank and funnel-shaped filter;
- an annular element, provided to surround the aforementioned upper opening of the boiling water tank;
- an upper group, removably coupled with the aforementioned lower group by means of a plate designed to be located, with interposition of annular sealing means, above the aforementioned annular element of the lower group, the aforementioned second plate-like filter being associated with the aforementioned plate and in communication with the underlying funnel-shaped filter;
- a collecting chamber, formed in the aforementioned plate directly above the aforementioned second plate-like filter, intended to receive the aforementioned liquid infusion raising through the latter, to convey it into the aforementioned pipe;
- a support plate, provided on top of the aforementioned plate and intended to receive a removable collecting pot made of glass, the latter being intended to receive the liquid infusion coming out from the aforementioned pipe;
- said annular element being made of metal and being joined to the boiling water tank, this latter also being made of borosilicate, heat-resistant glass or ceramic.

### BRIEF DESCRIPTION OF THE DRAWINGS

The characteristics of the invention will become apparent from the following description of preferred embodiments of the improved moka pot under discussion, in accordance with the contents of the claims and with help of the enclosed figures, in which:
- Fig. 1 is a side view of a first embodiment of the moka pot;
- Fig. 2 is an exploded view of the moka pot of Fig. 1;
- Fig. 3 is a section view in enlarged scale of the moka pot of Fig. 1 in the joining area between the lower part and upper part;
- Fig. 4 is a side view of a second embodiment of the moka pot;
- Fig. 5 is a perspective view of the moka pot of Fig. 4;
- Fig. 6 is an exploded view of the moka pot of Fig. 4;
- Fig. 7 is an enlarged section view of the moka pot of Fig. 4 in the joining area between the lower part and upper part.

### DETAILED DESCRIPTION OF THE INVENTION

In the above listed figures, the reference numeral 1 indicates the moka pot under discussion, as a whole.

In a way known in itself, the moka pot 1 comprises:
- a boiling water tank 2, designed to contain a predetermined amount of water and intended to be positioned with its bottom so located as to receive heat from a source below, for example a cooking stove, not shown;
- a maximum pressure release valve V, associated with the aforementioned boiling water tank 2;
- a funnel-shaped filter 3, designed to contain a predetermined amount of ground coffee, intended to be positioned at the upper opening 2B of the boiling water tank 2 and partially inserted therein, to allow hot water produced inside the boiling water tank 2 to rise through said ground coffee, according to the process known as percolation;
- a second plate-like filter 4, located directly above the aforementioned funnel-shaped filter 3 and provided to prevent the ground coffee from rising together with the liquid infusion;
- a pipe 5 extending upwards, designed to collect the liquid infusion rising through the aforementioned second plate-like filter 4 and to convey it into a collecting pot 6 placed thereabove.

According to the invention, the moka pot 1 is composed of a lower group 10 and an upper group 20, fastened removably to the lower group by quick connection means 30 and with the interposition of annular sealing means 40.

The annular sealing means 40 are made of a suitable elastomeric material, natural or synthetic, resistant to high temperatures, like the seals in the moka pots of known type.

The lower group 10 comprises the aforementioned boiling water tank 2, with its valve V and a funnel-shaped filter 3; an annular element 11, preferably made of metal, is provided around the above mentioned upper opening 2B of the boiling water tank 2,

In the preferred constructive solution shown in the figures, the boiling water tank 2 is made of heat-resistant borosilicate glass, with the annular element 11 joined thereto, for example by means of silicone-based adhesives. Alternatively, the annular element 11 has a screw clamp shape and is provided with means, for example screws, that allow to widen or reduce its diameter, in order to introduce and block it, respectively.

In a first constructive version, not shown, the aforementioned annular element 11 and boiling water tank 2 are made as a single metal body.

In a second constructive version, likewise not shown, the aforementioned boiling water tank 2 is made of ceramic, with the annular element 11 made of metal integral therewith.

The funnel-shaped filter 3 is configured in such a way that the upper edge 3B of the coffee tray is slightly folded outwards, so as to firmly rest on the upper opening 2B of the boiling water tank 2.

In a third constructive version, not shown,the annular element 11 is shaped so as to be placed on top of the above mentioned upper opening 2B of the boiling water tank 2 and define an annular seat to support the funnel-shaped filter 3.

The upper group 20 comprises a plate 21, preferably made of metal, aimed at positioning, with interposition of the aforementioned annular sealing means 40, above the aforementioned annular element 11 of the lower group 10.

The aforementioned second plate-like filter 4 is fastened to the plate 21, so as to be in direct communication with the underlying funnel-shaped filter 3.

In the preferred constructive solution shown in the figures, the second plate-like filter 4 is made separately and removably introduced in the plate 21, however, according to a not shown version, the aforementioned second plate-like filter 4 could be made as one body with the plate 21.

The plate 21 forms, directly above the second plate-like filter 4, a collecting chamber 22, intended to receive the liquid infusion, that is coffee, raising from the second plate-like filter 4 after having passed through the dose of the ground coffee contained in the underlying funnel-shaped filter 3, so as to convey it to the aforementioned pipe 5, set in communication with the collecting chamber 22.

In its upper part, the plate 21 is provided with a support plate 23 aimed at receiving the aforementioned collecting pot 6, which, according to the invention, is advantageously removable and made of heat-resistant borosilicate glass, like the boiling water tank 2.

The pipe 5 is suitably off-centre and shaped with respect to the support plate 23, depending on the shape and height of the collecting pot 6, so as not to interfere therewith.

In the preferred constructive solution shown in the figures, the aforementioned support plate 23 is advantageously made as one body with the above mentioned pipe 5, the support plate 23 is adapted to close the top of the above mentioned collecting chamber 22, and the group support plate 23 and pipe 5 is removably associated with the above mentioned small plate 21, so as to facilitate cleaning operations of both the collecting chamber 22 and pipe 5.

Furthermore the support plate 23 and the associated pipe 5 are made of heat-resistant borosilicate glass, like the already mentioned components.

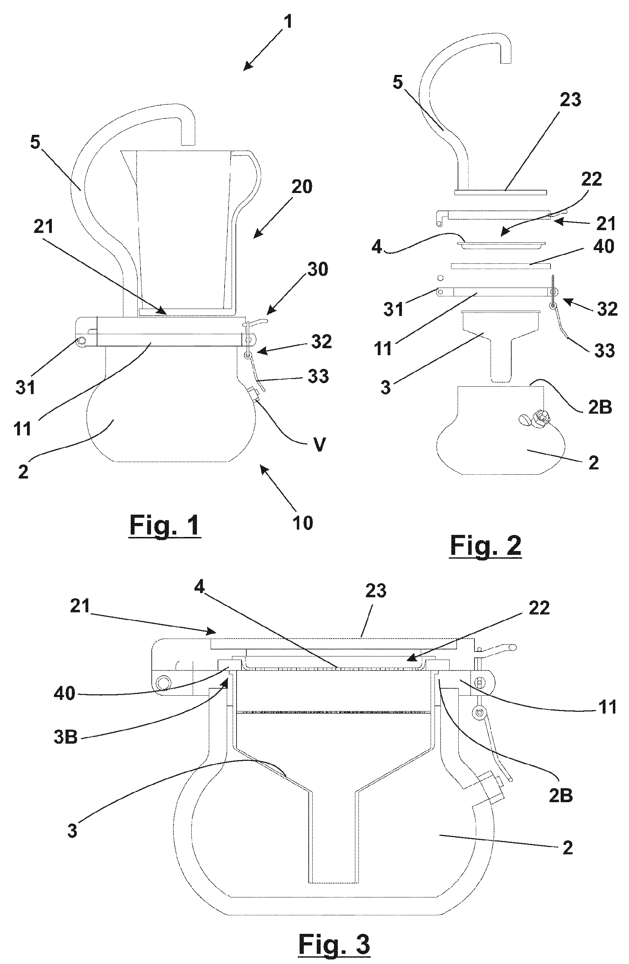

In a first embodiment of the invention, illustrated in Figures 1 to 3, the aforementioned quick connection means 30, interposed between the aforementioned groups, lower 10 and upper 20, include a horizontal axis hinge 31, intended for mutual articulation of the aforementioned annular element 11 and plate 21, and at least one hook closure 32 designed to retain the aforementioned upper group 20 adherent to and joined to the lower one 10 during the operation of the above mentioned moka pot 1, by application of a sufficient axial pressure on the aforementioned annular sealing means 40 (Figs. 1 and 3).

For example, the hook closure 32 is similar to the one used in the glass pots and made of steel wire, and its closing position is automatically stabilized, when the control lever 33 overcomes a dead centre of its rotation; the details of such operation have not been illustrated, as they are known.

Once opened, the hook closures 32 allow the upper group 20 to tilt, thus making the above mentioned funnel-shaped filter 3 as well as to the underlying boiling water tank 2 accessible in order to fill/load them.

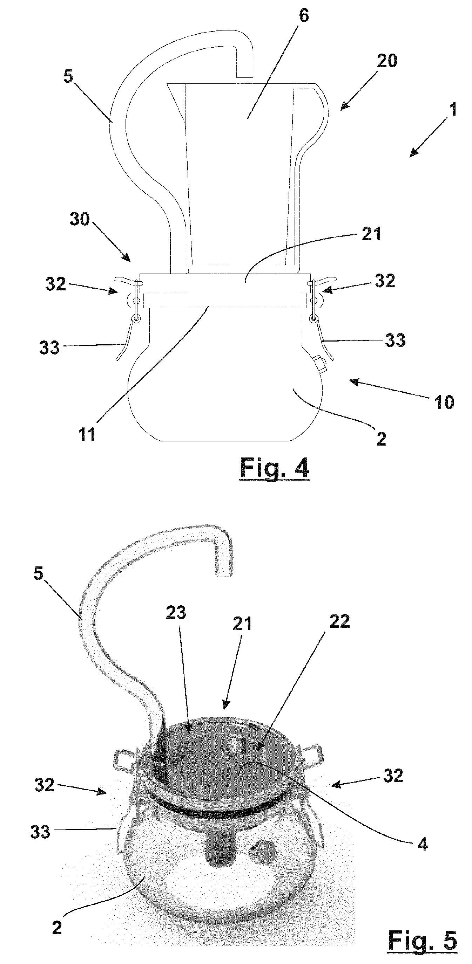

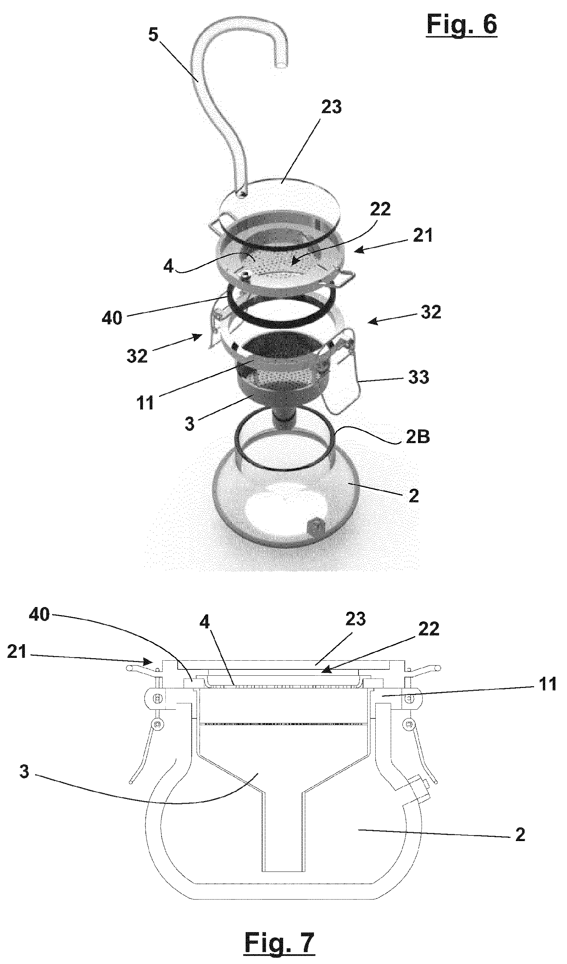

In a second embodiment of the invention, illustrated in Figures 4 to 7, the aforementioned quick connection means 30 include at least two of the aforementioned hook closures 32, diametrically opposite, designed to retain the aforementioned plate 21 adherent and joined to the aforementioned annular element 11 during operation of the aforementioned moka pot 1, by application of a sufficient axial pressure on the above mentioned annular sealing means 40.

Once opened, the hook closures 32 allow the upper group 20 to be freed, thus making the above mentioned funnel-shaped filter 3 as well as to the underlying boiling water tank 2 accessible in order to fill/load them.

The advantageous characteristics of the moka pot proposed by the invention become extremely evident from what has been stated above, in particular, in relation to the aspects regarding the opening speed and simplicity, loading steps and likewise rapid closure.

It is important to point out how the use of the described hook closures makes the opening and closing operations possible also for persons who are not strong or are no longer able to apply intense forces, unlike the moka pots to be screwed.

Another advantage derives from the fact that the effort necessary to close the moka pot is substantially identical with the effort necessary to open it, and in both cases, these actions need a limited force.

Another advantageous aspect derives from the solution according to which the pot can be removed from the body of moka pot, so as to facilitate pouring out of coffee.

The above mentioned preferred embodiments, in which many components are made of glass, appear to be very useful to visually control whether the boiling water tank has been actually filled up, when the moka pot is placed on the cooking stove; the visual control continues during the whole perfusion of the beverage, with a nice spectacular effect, and makes it possible to see its completion without the need to lift the lid or listen carefully to the typical noises.

The proposed moka pot, due to a number of parts of glass, becomes a sophisticated design object, which combines advantageous technical features and beauty. It is also very important to point out that the components made of glass or ceramic, unlike those made in metal, are much less subjected to the formation and establishing of colonies of bacteria, even heat-resistant, therefore the embodiments of the invention which have such components are much safer in terms of hygienic features, especially after a prolonged use of the moka pot.

In any case, it is understood that what has been described above is purely illustrative and not limiting, therefore possible variations of details, that could become necessary due to the technical and/or functional reasons, are considered within the protective scope defined in the claims below.

## Claims

1. An improved moka pot, in which the beverage is obtained by percolation and includes: a boiling water tank (2), designed to contain a predetermined amount of water and intended to be positioned with its bottom at a position to receive heat from a source below; a maximum pressure release valve (V), associated with said boiling water tank (2); a funnel-shaped filter (3), designed to contain a predetermined amount of ground coffee, intended to be positioned at the upper opening (2B) of said boiling water tank (2) and partially inserted therein, to allow hot water produced inside the boiling water tank (2) to rise through said ground coffee; a second plate-like filter (4), located directly above said funnel-shaped filter (3) and provided to prevent said ground coffee from rising together with the liquid infusion; a pipe (5) extending upwards, designed to collect said liquid infusion rising through said second plate-like filter (4) and to convey it into a collecting pot (6) placed thereabove, with said moka pot (1) **characterized in that** it includes:
- a lower group (10), comprising the aforementioned boiling water tank (2) and said funnel-shaped filter (3);
- an annular element (11), provided to surround the aforementioned upper opening (2B) of the boiling water tank (2);
- an upper group (20), removably coupled with said lower group (10) by means of a plate (21) designed to be located, with interposition of annular sealing means (40), above said annular element (11) of the lower group (10), said second plate-like filter (4) being associated with said plate (21) and in communication with the underlying funnel-shaped filter (3);
- a collecting chamber (22), formed in said plate (21) immediately above said second plate-like filter (4) and intended to receive said liquid infusion raising through the latter, to convey it into said pipe (5);
- a support plate (23), provided on top of said plate (21) and intended to receive a removable glass collecting pot (6), the latter being intended to receive the liquid infusion coming out from said pipe (5);
- said annular element (11) being made of metal and being joined to the boiling water tank (2), this latter also being made of borosilicate, heat-resistant glass or ceramic.

2. A moka pot according to claim 1, **characterized by** quick connection means (30), interposed between said groups, lower (10) and upper (20).

3. A moka pot as in claim 2, **characterized in that** said quick connection means (30) include at least two hook closures (32), diametrically opposite, designed to retain said plate (21) adherent and joined to said annular element (11) during the operation of said moka pot (1), by application of a sufficient axial pressure on said annular sealing means (40), with the same quick connection means (30) also capable of allowing the same upper group (20) to be detached for giving access to said funnel-shaped filter (3), when both the latter and said boiling water tank (2) are being filled up.

4. A moka pot as in claim 2, **characterized in that** said quick connection means (30) include a horizontal axis hinge (31), intended for mutual articulation of the aforementioned annular element (11) and plate (21), and at least one hook closure (32) designed to retain said upper group (20) adherent and joined to the lower one (10) during the operation of said moka pot (1), by application of a sufficient axial pressure on said annular sealing means (40), with the same quick connection means (30) also capable of allowing the same upper group (20) to be tilted for access to said funnel-shaped filter (3), when both the latter and said boiling water tank (2) are being filled up.

5. A moka pot as in claim 1, **characterized in that** said support plate (23) is made as one body with said pipe (5), **in that** said support plate (23) is adapted to close the top of said collecting chamber (22),_and **in that** said support plate (23) with the associated pipe (5) are removably associated to said plate (21).

6. A moka pot as in claim 5, **characterized in that** said support plate (23) and the associated pipe (5) are made of heat-resistant borosilicate glass.

7. A moka pot according to any one of the preceding claims, **characterized in that** said annular element (11) is placed on top of said upper opening (2B) of the boiling water tank (2) to define an annular seat for the support of said funnel-shaped filter (3).
